# EUROPEAN PATENT APPLICATION

(11) **EP 3 742 111 A1**
(43) Date of publication of application: **25.11.2020**
(21) Application number: 18901685.0
(22) Date of filing: 27.11.2018
(51) Int. Cl.: G01B 11/06, C08J 5/04, C08J 5/24

(54) **METHOD FOR MEASURING CONDITIONS OF RESIN ON PREPREG SURFACE AND APPARATUS FOR MEASURING SAID CONDITIONS**

(30) Priority: 18.01.2018 JP 2018006293
(71) Applicant: Toray Industries, Inc., Tokyo, 103-8666 (JP)
(72) Inventor: HOSOKAWA, Naofumi, Nagoya-shi, Aichi 455-8502 (JP); YAMASAKI, Masaaki, Nagoya-shi, Aichi 455-8502 (JP); TSUMURA, Yusuke, Nagoya-shi, Aichi 455-8502 (JP); SAOTOME, Tsuyoshi, Nagoya-shi, Aichi 455-8502 (JP)
(74) Representative: Kador & Partner PartG mbB
(86) International application number: PCT/JP2018/043485
(87) International publication number: WO 2019/142503

(57) **Abstract**

In order to measure a thickness or a coverage of a resin present at a surface layer of a prepreg in a non-contact manner using a simple technique, there is provided a measurement method for a resin state, which is a method for measuring a state of a resin present at a surface layer of a prepreg impregnated with the resin in an unidirectional reinforced fiber base material, the method including: irradiating the surface layer of the prepreg with light from an irradiation source; receiving reflected light from the surface layer of the prepreg by a sensor; and calculating at least one of a thickness or a coated state of the resin present at the surface layer of the prepreg from intensity of the reflected light.

## Description

### TECHNICAL FIELD

The present invention relates to a measurement method for a resin state (coverage, thickness, etc.) of a prepreg surface and a measurement device therefor.

### BACKGROUND ART

Composite materials containing carbon fibers, aramid fibers, glass fibers, etc. as reinforced fibers are used as structural materials for aircrafts and automobiles, or materials for sports goods or general industrial use, taking advantage of their high specific strength and specific elastic modulus. Particularly in the aviation industry, they are widely used to save fuel and reduce operating costs.

In manufacturing these aircraft components, automated fiber placement (AFP) technology and automated tape layup (ATL) technology are used. AFP and ATL are technologies for automatically arranging and stacking a narrow tape made of reinforced fibers and resin in an appropriate place such as a mold.

In order to stack a tape (specifically, the reinforced fibers constituting the tape) at the correct position, in the correct amount, and in the correct position using AFP technology and ATL technology, the tape itself must exhibit appropriate adhesiveness. It is known that the adhesiveness of the tape may vary depending on the tape storage conditions, the stacking process environment, and the like. Therefore, it is required to grasp the adhesiveness of the tape before the stacking process and to give appropriate feedback to the process.

As a method for grasping the adhesiveness of the tape before the stacking process, a method for directly measuring the adhesiveness with a contact-type adhesiveness tester is generally known (for example, Non-Patent Document 1). Using this method, the adhesiveness of the sample can be measured.

It is also known that as a factor relating to the development of the adhesiveness (tackiness) of the tape, the contribution of the thickness and the coverage of the surface resin of the tape is high.

As a method for measuring the thickness of a stacked tape, a method for measuring an uncured fiber-reinforced composite material component by non-contact 3D measurement of the component using 3D digital image correlation with patterned illumination is known. (For example, Patent Document 1). According to the technique disclosed in Patent Document 1, the difference in thickness can be calculated by non-contact 3D measurement.

### PRIOR ART DOCUMENTS

### PATENT DOCUMENT

Patent Document 1: Japanese Patent Laid-open Publication No. 2016-75662

### NON-PATENT DOCUMENT

Non-Patent Document 1: JIS Z 0237: 2009 Test method for adhesive tape and adhesive sheet

### SUMMARY OF THE INVENTION

### PROBLEMS TO BE SOLVED BY THE INVENTION

However, the measurement method disclosed in Non-Patent Document 1 damages the tape because it is a contact type. For this reason, it is necessary to perform offline measurement separately from the stacking process, and there is a problem that feedback cannot be applied in the stacking process.

In addition, there are problems that the measurement method disclosed in Patent Document 1 requires the introduction of a high-performance non-contact 3D measurement device, which requires a large initial cost, and that the device can measure the thickness of the tape, but cannot extract and measure the thickness and the coverage of the resin-only layer present at the surface layer in the tape.

An object of the present invention is to provide a method for measuring a coated state such as a thickness or a coverage of a resin present at a surface layer of a prepreg in a non-contact manner using a simple technique and a measurement device therefor.

### SOLUTIONS TO THE PROBLEMS

In order to achieve the above object, the present invention has one of the following configurations.
(1) A measurement method for a resin state, which is a method for measuring a state of a resin present at a surface layer of a prepreg impregnated with the resin in an unidirectional reinforced fiber base material, the method including: irradiating the surface layer of the prepreg with light from an irradiation source; receiving reflected light from the surface layer of the prepreg by a sensor; and calculating at least one of a thickness or a coated state of the resin present at the surface layer of the prepreg from intensity of the reflected light.
(2) A measurement method for a resin state, which is a method for measuring a state of a resin present at a surface layer of a prepreg impregnated with the resin in an unidirectional reinforced fiber base material, the method including: irradiating the surface layer of the prepreg with light from an irradiation source; receiving reflected light from the surface layer of the prepreg by a sensor; and calculating a thickness and a coated state of the resin present at the surface layer of the prepreg from intensity of the reflected light.
(3) The measurement method for a resin state according to the item (1) or (2), in which the irradiation source is arranged in a direction perpendicular to an orientation direction of continuous fibers constituting the unidirectional reinforced fiber base material and so as to have an acute angle with respect to a plane of the unidirectional reinforced fiber base material, while a light receiving surface of the sensor is arranged substantially parallel to the plane of the unidirectional reinforced fiber base material.
(4) The measurement method for a resin state according to any one of the items (1) to (3), in which the irradiation source is arranged in a direction parallel to an orientation direction of continuous fibers constituting the unidirectional reinforced fiber base material and so as to have an acute angle with respect to a plane of the unidirectional reinforced fiber base material, while a light receiving surface of the sensor is arranged perpendicular to reflected light that appears from the plane of the unidirectional reinforced fiber base material in an acute angle direction.
(5) The measurement method for a resin state according to any one of the items (1) to (4), in which the acute angle formed by the irradiation source and the plane of the unidirectional reinforced fiber base material is 5 to 60°.
(6) A method for producing a fiber-reinforced resin molded body, in which, in obtaining a fiber-reinforced resin molded body from a prepreg, a resin state of the prepreg is measured by the method according to any one of the items (1) to (5), and the measurement result is reflected in a placement device for the prepreg to control a placement position of the prepreg.
(7) The method for producing a fiber-reinforced resin molded body according to the item (6), in which a placement state of the prepreg is measured in addition to the resin state and reflected in control.
(8) A measurement device for a resin state, which is a device that measures a state of a resin present at a surface layer of a prepreg impregnated with the resin in an unidirectional reinforced fiber base material, the device including at least: an irradiation source that irradiates the prepreg with irradiation light; a sensor that receives reflected light from the irradiation light; and a calculation unit that calculates at least one of a thickness or a coated state of the resin present at the surface layer of the prepreg from intensity of the reflected light.
(9) A measurement device for a resin state, which is a device that measures a state of a resin present at a surface layer of a prepreg impregnated with the resin in an unidirectional reinforced fiber base material, the device including at least: an irradiation source that irradiates the prepreg with irradiation light; a sensor that receives reflected light from the irradiation light; and a calculation unit that calculates a thickness and a coated state of the resin present at the surface layer of the prepreg from intensity of the reflected light.
(10) The measurement device for a resin state according to the item (8) or (9), in which the irradiation source irradiates irradiation light in a direction perpendicular to an orientation direction of continuous fibers constituting the unidirectional reinforced fiber base material and so as to have an acute angle with respect to a plane of the unidirectional reinforced fiber base material, while a light receiving surface of the sensor is arranged substantially parallel to the plane of the unidirectional reinforced fiber base material.
(11) The measurement device for a resin state according to the item (8) or (9), in which the irradiation source irradiates irradiation light in a direction parallel to an orientation direction of continuous fibers constituting the unidirectional reinforced fiber base material and so as to have an acute angle with respect to a plane of the unidirectional reinforced fiber base material at the surface layer, while a light receiving surface of the sensor is arranged perpendicular to light that appears from the plane of the unidirectional reinforced fiber base material in an acute angle direction.
(12) The measurement device for a resin state according to any one of the item (8) to (11), in which two irradiation sources are provided, and the irradiation sources are arranged at positions that are line-symmetric with respect to an orientation of reinforced fibers of the prepreg.
(13) A production device for a fiber-reinforced resin molded body, the production device including: the measurement device according to any one of the items (8) to (12); and a placement device for a prepreg, in which a measurement result by the measurement device is reflected in the placement device to control placement of the prepreg.
(14) The production device for a fiber-reinforced resin molded body according to the item (13), the production device further including a device that measures a placement state of the prepreg, in which a placement result of the prepreg is reflected in control.

### EFFECTS OF THE INVENTION

According to the present invention, the state (coated state such as the thickness and the coverage) of the resin present at the surface layer of the prepreg can be measured simply in a non-contact manner.

### BRIEF DESCRIPTION OF THE DRAWINGS

Fig. 1 is a schematic diagram of an example of a prepreg used in the present invention.
Figs. 2 are schematic diagrams showing a direction of light irradiation to reinforced fibers and a direction of reflection of the light from the reinforced fibers, in which Fig. 2(a) shows a case where irradiation light and the reinforced fibers are orthogonal to each other, and Fig. 2(b) shows a case where the irradiation light and the reinforced fibers are parallel to each other.
Figs. 3 are schematic diagrams showing light absorption and reflected light attenuation in a surface resin, in which Fig. 3(a) shows a case where there is no surface resin, Fig. 3(b) shows a case where a surface resin is thin, and Fig. 3(c) shows a case where the surface resin is thick.
Figs. 4 are conceptual diagrams showing the concept of a method for calculating a thickness and a coverage of the surface resin, in which Fig. 4(a) shows a measurement image, Fig. 4(b) shows a case where the measurement image is binarized, and Fig. 4(c) shows a case where the measurement image is ternarized.
Figs. 5 are schematic views showing one example of a measurement device for a surface resin according to the present invention, in which Fig. 5(a) is a top view, Fig. 5(b) is a front view, and Fig. 5(c) is a schematic perspective view.
Fig. 6 is a schematic view showing another example of the measurement device for a surface resin according to the present invention.
Figs. 7 are schematic views showing an example of light sources of an irradiation source.
Fig. 8 is a schematic view showing one example of a production device for a fiber-reinforced resin molded body according to the present invention.

### EMBODIMENTS OF THE INVENTION

The present invention relates to a method and a device for measuring a state of a resin present at a surface layer of a prepreg, and preferred embodiments of the present invention will be described below with reference to the drawings. However, the following embodiments are merely examples of the preferred embodiments of the present invention, and the present invention is not limited to these embodiments.

A prepreg has a configuration in which a matrix resin is impregnated into a unidirectional reinforced fiber base material. As the reinforced fibers, it is preferable to use, for example, carbon fibers, glass fibers, aramid fibers, Kevlar fibers, and the like. As the matrix resin, any of a thermosetting resin and a thermoplastic resin can be used. The width of the prepreg is not particularly limited, but 1.5 inch (about 38.1 mm) width, 1/2 inch(about 12.7 mm) width, 1/4 inch(about 6.4 mm) width, or 1/8 inch(about 3.2 mm) width etc. can be used.

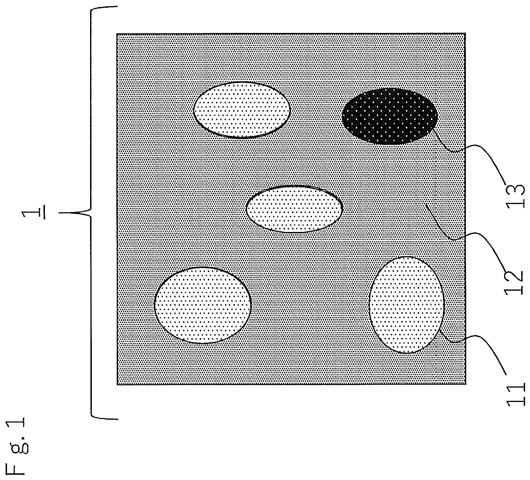

A prepreg as a measurement target of the present invention is not one in which a matrix resin is uniformly impregnated. As shown in Fig. 1, the prepreg includes fiber exposed portions 11 in which a matrix resin is substantially absent at the surface of prepreg 1 and reinforced fibers are exposed, or a resin-coated portion 12 in which the reinforced fibers are not exposed and a part of the resin-coated portion 12 is a resin-coated thick portion 13 where the thickness of the resin is thicker than the surroundings.

Next, the principle of measurement of the surface resin state of the prepreg 1, that is, the thickness and coated state of the resin present at the surface layer of the prepreg will be described. Here, the surface resin state indicates a state that can be quantified from surface observation. Specifically, although not particularly limited, there are given, for example, the thickness of the surface resin and resin coated states (resin coverage, the shapes of the fiber exposed portions 11, the maximum value, the average value, the minimum value of the areas of the fiber exposed portions 11, the number of the fiber exposed portions 11 per unit area, etc.). For example, both the thickness and the coated state of the resin may be measured, or only one of them may be measured. Still another value may be calculated. The thickness of the surface resin refers to the thickness of the resin present at the surface layer of the prepreg, that is, the thickness of the resin from the outermost surface of the prepreg 1 to the first contact with the reinforced fibers in the thickness direction.

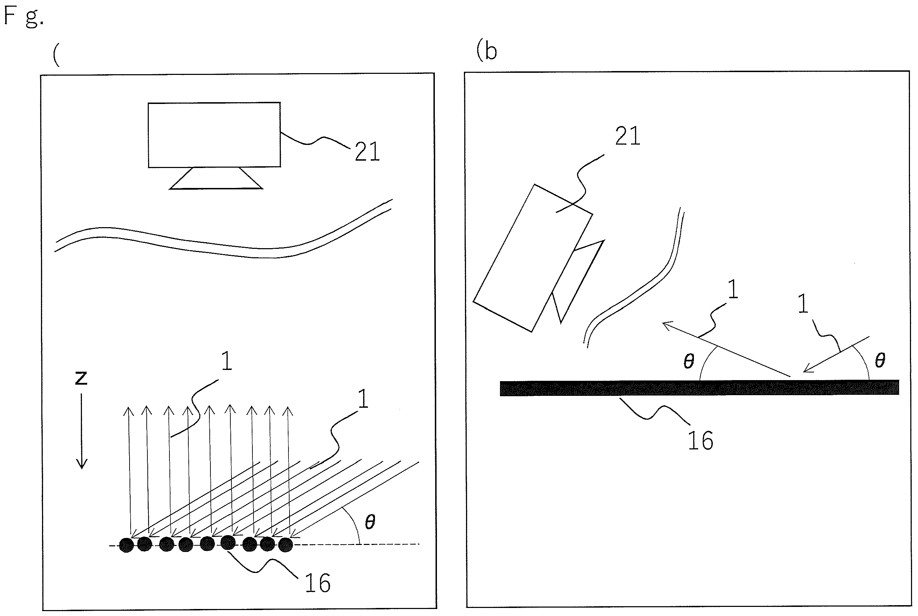

In the present invention, light is irradiated from an irradiation source to the surface layer of the prepreg, the reflected light from the surface layer of the prepreg is received by a sensor, and the state of the resin (thickness, coated state, etc.) present at the prepreg surface layer is calculated from the intensity of the reflected light. Figs. 2 show a state in which light is irradiated from the irradiation source to the surface layer of the prepreg, and the reflected light from the surface layer of the prepreg is received by the sensor. Fig. 2(a) shows reflection of light in a case where irradiation light 14 and the reinforced fibers 16 in an unidirectional reinforced fiber base material constituting the prepreg are orthogonal to each other (that is, the irradiation source is arranged in a direction perpendicular to an orientation direction of continuous fibers constituting a unidirectional reinforced fiber base material), and Fig. 2(b) shows reflection of light in a case where the irradiation light 14 and the reinforced fibers 16 are parallel to each other (that is, the irradiation source is arranged in parallel to the orientation direction of continuous fibers constituting the unidirectional reinforced fiber base material). Here, that the irradiation light is orthogonal or perpendicular to the orientation direction of the reinforced fibers does not necessarily mean that that the angle needs to be 90°, and a range of approximately ± 15° from the angle, preferably a range of ± 10° can be included in the range of the "orthogonal" and "perpendicular". This range is a range in which the effects of the present invention can be substantially obtained.

As shown in Fig. 2(a), when the irradiation light 14 is applied in a direction perpendicular to the orientation direction of the reinforced fibers included in the unidirectional reinforced fiber base material (in the xy plane) and so as to have an acute angle θ (°: an angle in the z-axis coordinate direction with respect to the xy plane) with respect to the plane of the unidirectional reinforced fiber base material at the surface layer (in the xy plane), in a case where the prepreg 1 is observed from the z-axis side, a part of the irradiation light 14 is always specularly reflected by the reinforced fibers 16 and travels as a reflected light 15 in the direction of a sensor 21 arranged substantially parallel to a position perpendicular to the plane of the unidirectional reinforced fiber base material. At this time, it is preferable that the light receiving surface of the sensor 21 is arranged substantially parallel to the plane of the unidirectional reinforced fiber base material.

Further, as shown in Fig. 2(b), when the irradiation light 14 is applied in a direction parallel to the orientation direction of the reinforced fibers included in the unidirectional reinforced fiber base material (in the xy plane) and so as to have an acute angle θ (°: an angle in the z-axis coordinate direction with respect to the xy plane) with respect to the plane of the unidirectional reinforced fiber base material at the surface layer (in the xy plane) in a case where the prepreg 1 is observed from the z-axis side, a part of the irradiation light 14 is always specularly reflected by the reinforced fibers 16, and the reflected light 15 appears at an angle that is acute with respect to the plane of the unidirectional reinforced fiber base material. That is, the specularly reflected light does not travel in the direction perpendicular to the plane of the unidirectional reinforced fiber base material. Therefore, it is preferable that the light receiving surface of the sensor 21 is arranged perpendicular to the reflected light that appears from the plane of the unidirectional reinforced fiber base material in the acute angle direction.

As described above, the angle of the reflected light 15 from which the irradiation light 14 is specularly reflected changes depending on the relationship between the angle of the irradiation light and the orientation direction of the reinforced fibers included in the unidirectional reinforced fiber base material constituting the prepreg 1. Therefore, by arranging the sensor 21 at an appropriate position according to the irradiation source and the orientation direction of the reinforced fibers, it is possible to reliably receive the specularly reflected light 15.

In the present invention, whether to adopt the configuration as shown in Fig. 2(a) or the configuration as shown in Fig. 2(b) may be appropriately selected. For example, when a two-dimensional image is obtained using an area sensor, an image of the prepreg as viewed from the front can be obtained. Therefore, it is preferable to adopt the configuration of Fig. 2(a). On the other hand, when a one-dimensional image is obtained using a line sensor, either of the configurations shown in Figs. 2(a) and 2(b) may be used. The modes shown in Figs. 2(a) and 2(b) can be used in combination with different wavelengths of irradiation light and different filter wavelengths of the sensor.

In the present invention, the acute angle arranged with respect to the plane of the unidirectional reinforced fiber base material at the surface layer (that is, the acute angle formed by the plane of the unidirectional reinforced fiber base material and the irradiation light) is 5 to 60°. More preferably, it is 5 to 45°, and still more preferably 10 to 30°.

The irradiation light 14 is not particularly limited in form, but it is more preferable that the irradiation light 14 is parallel light such as laser in which light from the irradiation source does not diffuse or converge.

The sensor 21 is not limited in mechanism and form as long as the sensor 21 can measure the intensity of the reflected light from the prepreg 1. For example, an area camera or a line camera can be adopted for image acquisition.

Next, a method for measuring the surface resin state (thickness and coated state) of the prepreg 1 by the measurement method described above will be described.

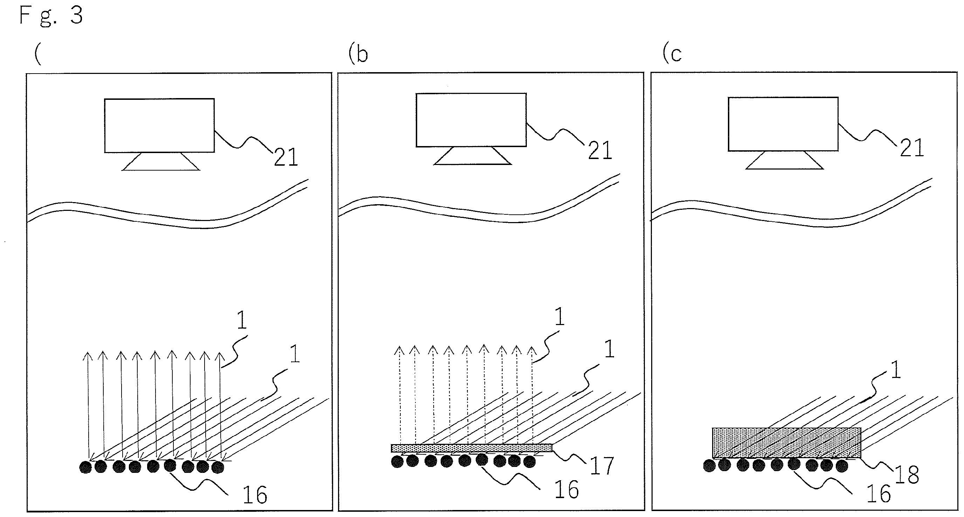

Figs. 3 schematically show a state in which the irradiation light 14 applied to the prepreg 1 is absorbed by the resin present at the surface of the prepreg 1 and the reflected light 15 is attenuated. Fig. 3(a) is a schematic diagram for showing the case where no resin is present on the surface of the unidirectional reinforced fiber base material, Fig. 3(b) is a schematic diagram for showing the case where the resin is present on the surface of the unidirectional reinforced fiber base material and the thickness of the surface resin is thin, and Fig. 3(c) is a schematic diagram for showing a case where the resin is present on the surface of the unidirectional reinforced fiber base material and the thickness of the surface resin is thick. In Figs. 3, the irradiation light 14, the prepreg 1, and the sensor 21 are arranged in a positional relationship as shown in Fig. 2(a).

As shown in Fig. 3(a), when no resin is present on the surface of the unidirectional reinforced fiber base material, the irradiation light 14 is specularly reflected by the reinforced fibers 16, and the reflected light 15 of sufficient intensity can be detected by the sensor 21. On the other hand, as shown in Fig. 3(b), when a thin resin 17 is present on the surface of the unidirectional reinforced fiber base material, the irradiation light 14 is attenuated in the resin, and as a result, the reflected light 15 that is specularly reflected by the reinforced fibers 16 is also attenuated. Therefore, the sensor 21 can detect only the reflected light 15 with slight intensity. Further, as shown in Fig. 3(c), when a thick resin 18 is present on the surface of the unidirectional reinforced fiber base material, the irradiation light 14 is attenuated early, and the reflected light 15 is not generated, and as a result, the reflected light 15 cannot be detected by the sensor 21.

Since the presence or absence and thickness of the resin are reflected in the intensity of the reflected light as described above, the presence or absence of the resin and the thickness of the resin present on the surface of the unidirectional reinforced fiber base material can be measured from the intensity of the reflected light 15 detected by the sensor 21. That is, in the present invention, since the intensity of the reflected light appears in one measurement image, the thickness and the coated state of the resin can be calculated based on the intensity.

In Figs. 3, description is made of the mode in which the irradiation light 14 is applied in the direction perpendicular to the orientation direction of the reinforced fibers included in the unidirectional reinforced fiber base material and so as to have an acute angle with respect to the plane of the unidirectional reinforced fiber base material. However, also in the case where the irradiation light 14 is applied in the direction parallel to the orientation direction of the reinforced fibers included in the unidirectional reinforced fiber base material and so as to have an acute angle with respect to the plane of the unidirectional reinforced fiber base material, the thickness and the coated state of the resin can be calculated based on the intensity of the reflected light.

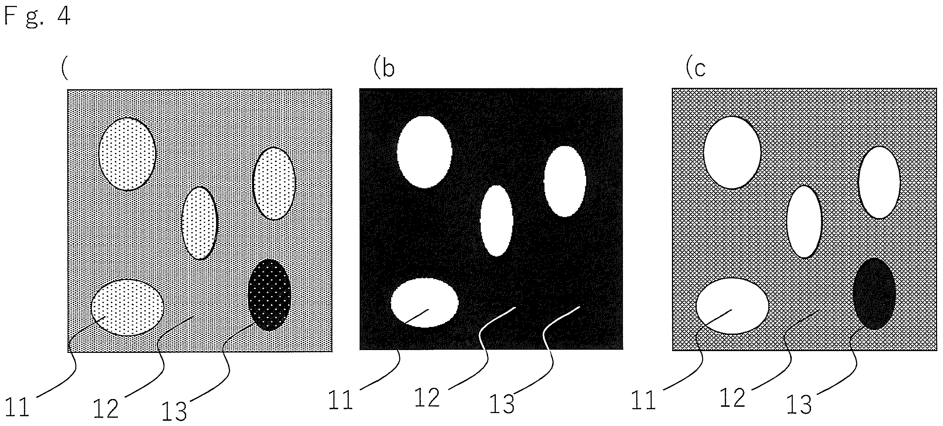

The intensity of the reflected light intensity detected by the sensor 21 is represented by an image, for example, as shown in Figs. 4. Fig. 4(a) shows an example of a measurement image measured by an area camera. In one image, a portion having high reflected light intensity is represented by white, and a portion having low reflected light intensity is represented by black. Here, the portions having high reflection intensity (white portion) are the fiber exposed portions 11, and the color becomes closer to black as the resin becomes thicker. Then, for example, Fig. 4(b) shows an example of a case where the measurement image is binarized, and similarly to Fig. 4(a), the white portions are the fiber exposed portions 11, and the portion where the resin is present is black. Fig. 4(c) shows an example of a case where the measurement image is ternarized, and the white portions are the fiber exposed portions 11, and the color becomes closer to black from gray as the resin becomes thicker. Therefore, from these images, it is possible to calculate the thickness and the coated state (coverage, etc.) of the resin present on the surface of the unidirectional reinforced fiber base material.

The sensitivity setting at the time of photographing is preferably set appropriately so that the range of the reflection intensity of the fiber exposed portions 11 and the resin-coated thick portion 13 can be expressed. Further, when binarization is performed as shown in Fig. 4(b), the ratio of the number of pixels in the black portion to the total number of pixels in the image can be calculated as the resin coverage of the prepreg 1. Similarly, when binarization is performed as shown in Fig. 4(b), for example, from the area and the number of white portions, the shapes of the fiber exposed portions 11, the maximum value, the average value, and the minimum value of the areas of the fiber exposed portions 11, and the number of the fiber exposed portions 11 per unit area can be calculated. Furthermore, by taking a reference using a sample whose resin thickness is known in advance, it is possible to convert the shade of the color appearing in the measured image into the actual thickness. In this case, the blackest portion of the measurement image is defined as a resin thickest portion, and the whitest portion is defined as a resin exposed portion. A larger number of critical values for dividing the shade between the portions are provided, so that the resolution of the resin thickness can be increased.

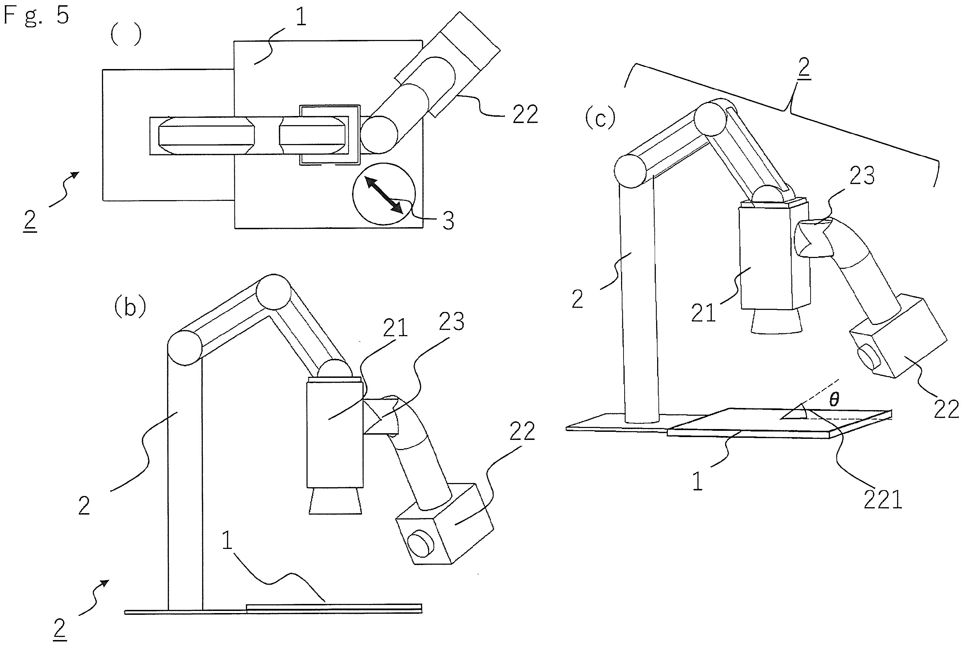

Next, Figs. 5 show schematic views of a surface resin measurement device that indicates one embodiment of the present invention and measures the state (thickness, coated state, etc.) of the resin present at the surface layer of the prepreg formed of the unidirectional reinforced fiber base material. As shown in Fig. 2(a), the surface resin measurement device 2 shown in Figs. 5 includes at least the sensor 21 and an irradiation source 22, and the irradiation source 22 is arranged in a direction perpendicular to the orientation direction of the continuous fibers constituting the unidirectional reinforced fiber base material and so as to have an acute angle with respect to the plane of the unidirectional reinforced fiber base material at the surface layer. Here, the double arrow 3 shown in Fig. 5(a) is the orientation direction of the continuous fibers constituting the unidirectional reinforced fiber base material in the prepreg 1.

The surface resin measurement device 2 includes a rotation mechanism 23 that enables the irradiation source 22 to rotate, and a holding mechanism 24 that holds the sensor 21 and the irradiation source 22. The prepreg 1 that is a measurement target may be manually placed on the surface resin measurement device 2 or may be mechanically placed in combination with an automatic fiber placement device (placement device for a prepreg) (not shown). Further, the surface resin measurement device 2 includes a calculation unit (not shown) that calculates the thickness and the coated state of the resin present at the surface layer of the prepreg 1 from the intensity of the reflected light 15 obtained by the sensor 21.

The sensor 21 is not limited in mechanism and form as long as the sensor 21 can measure the intensity of the reflected light 15 from the reinforced fibers in the prepreg. For example, an area camera or a line camera can be adopted for image acquisition. By performing an operation for binarizing the acquired image and recognizing the boundary by a calculation unit (not shown), the areas, the peripheral lengths, and the like of the fiber exposed portions 11 can be calculated. In addition, the thickness of the coated resin and the like can be calculated by performing an operation for quantifying the acquired image and recognizing the boundary, and the like.

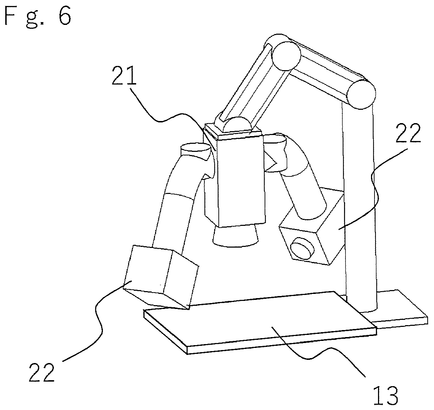

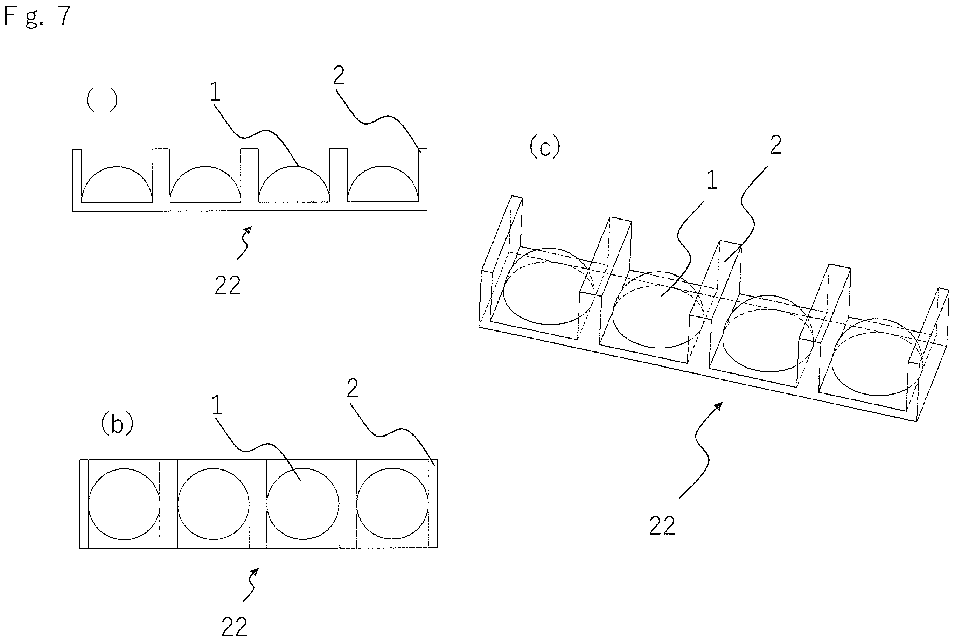

The irradiation source 22 is not particularly limited in mechanism and form, but is more preferable that the irradiation source 22 is a parallel light source such as laser in which light from the irradiation source does not diffuse or converge. Further, as shown in Fig. 6, it is preferable that the two irradiation sources are arranged at positions that are line-symmetric with respect to the orientation direction of the continuous fibers constituting the unidirectional fiber base material. Further, it is also preferable that the two irradiation sources are present so as to be opposite to each other by 180° with respect to the central axis of light entering the sensor in a plane parallel to the reinforced fiber base material. By arranging in this manner, shadows are less likely to occur in the measurement area. Further, as shown in Figs. 7, in order to prevent the irradiation light 14 from diffusing in the horizontal direction, it is preferable to provide a diffusion prevention mechanism 42 such as a light control film for blocking the diffusion light of light sources 41.

The surface resin measurement device described above can be used in combination with an automatic fiber placement device (not shown). The automatic fiber placement device is not limited in mechanism and form as long as the prepreg 1 can be placed automatically. A suitable prepreg heating device, prepreg pressurizing device, prepreg cutting device, functional particle imparting device, and the like can be provided. In particular, the calculation results of the thickness and the coated state of the surface resin can be reflected in the placement control of a new reinforced fiber base material.

A procedure for measuring the thickness and coated state of the surface resin of the prepreg when the measurement device shown in Figs. 5 is used will be described.

First, the prepreg 1 is prepared within the measurement range of the surface resin measurement device 2. It is preferable to place the prepreg 1 directly below the sensor 21. When measurement is performed as shown in Fig. 2(b), the position of the light receiving surface of the sensor 21 may be inclined with respect to the plane (xy plane) of the prepreg 1.

Next, the height of the sensor 21 is adjusted so as to focus the continuous fibers on which irradiation light is to be reflected. The height can be adjusted by the holding mechanism 24 shown in Fig. 5(b).

Subsequently, as shown in Fig. 5(a), the rotation mechanism 23 is adjusted so that the orientation direction 3 of the continuous fibers 16 on which the irradiation light is to be reflected is perpendicular to the irradiation light 14 from the irradiation source 22. At this time, the angle θ between the irradiation light 14 and the plane of the prepreg 1 is preferably 5° to 60°. If a part of the prepreg 1 protrudes out of the light receiving surface of the sensor 21, a part of the portion to be irradiated may be hidden behind the prepreg 1. Therefore, it is desirable to determine the angle θ in accordance with the smoothness of the prepreg 1 to be strongly reflected.

After the surface resin measurement device 2 is set in this way, the irradiation light 14 is irradiated. Since the irradiation light 14 is reflected by the prepreg 1, the reflected light 15 from the prepreg 1 is measured by the sensor 21. At this time, the portion where the continuous fibers 16 present in the perpendicular direction to the irradiation light 14 are exposed reflects strongly, and the portion coated with the resin reflects weakly, so that a high contrast image is obtained in the sensor 21.

At this time, it is preferable that the entire surface resin measurement device 2 is installed in a dark room so that only the reflected light 15 from the irradiation source 22 is introduced into the sensor 21 of the surface resin measurement device 2. It is also preferable to use irradiation light 14 having a wavelength different from that of the general illumination light, or to use a filter that blocks wavelengths other than the irradiation light 14.

Then, by performing the processing as described above on the obtained image by a calculation unit (not shown), the fiber exposed portions 11 can be easily recognized, and the ratio, the areas, the peripheral lengths, and the like of the fiber exposed portions 11 can be calculated. Further, the thickness of the coated resin can be calculated by comparison with a reference obtained using a sample whose resin thickness is known in advance.

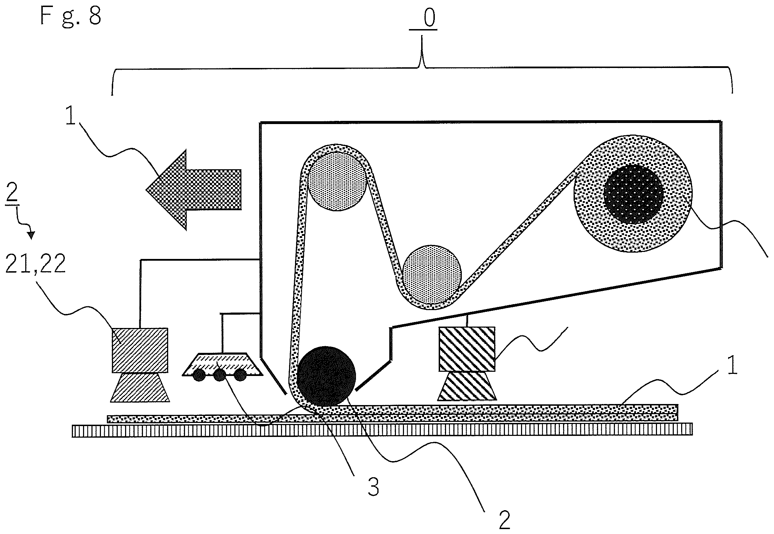

In producing a fiber-reinforced resin molded body, the surface resin measurement device 2 is provided to an automatic fiber placement device 50 as shown in Fig. 8, and the calculation result of the state (thickness, coated state, etc.) of the resin at the surface layer of the prepreg 1 can be reflected in the automatic fiber placement device to control the placement position of the prepreg.

The automatic fiber placement device 50 basically only needs to be able to place a prepreg, and its mechanism and driving unit are not limited. For example, a multi-joint robot mechanism or a portal-type three-axis control mechanism can be exemplified.

As shown in Fig. 8, the automatic fiber placement device 50 preferably includes a pressure load roll 52 and a heating mechanism 53 for integrating a plurality of stacked prepregs. The pressure load roll 52 only needs to be able to apply an appropriate pressure to the fibers, and its mechanism is not limited. For example, in order to follow a shape of a mold, it is desirable that rubber is used. The heating mechanism 53 only needs to be able to apply an appropriate temperature to the fibers. Although not limited, for example, a non-contact type temperature applying mechanism such as a laser mechanism or an IR irradiation mechanism can be exemplified.

Also, as shown in Fig. 8, the automatic fiber placement device 50 is provided with a placement state measurement mechanism 54, the placement state of the prepreg is calculated by measuring the height and the like of the placed prepreg, and the result can be reflected in the automatic fiber placement device 50 to control the placement position. For example, when a prepreg tape is stacked, if the tape itself does not exhibit appropriate adhesiveness, the tape is peeled upward. Therefore, by measuring the height of the prepreg, the placement state of the prepreg can be measured.

The placement state measurement mechanism 54 only needs to be able to determine the state of the placed prepreg (peeling, floating, overlap, etc.). Although the mechanism is not limited, for example, a mechanism that measures the height using a laser-type or ultrasonic-type distance meter or a mechanism that determines the degree of sticking from an image can be exemplified.

The result of the measurement by the placement state measurement mechanism 54 is integrated with the result of the measurement by the surface resin measurement device 2, and the heating temperature and energy of the heating mechanism 53 of the automatic fiber placement device 50, the pressure of the pressure load roll 52 of the automatic fiber placement device 50, or the stacking speed of the automatic fiber placement device 50 can be controlled.

The placement state measurement mechanism 54 is installed on the side opposite to a traveling direction 51 of the automatic fiber placement device with reference to the pressure load roll 52 of the automatic fiber placement device 50. On the other hand, the surface resin measurement device 2 is installed in front of the automatic fiber placement device 50 with respect to the traveling direction 51 of the automatic fiber placement device 50.

In the device configuration shown in Fig. 8, the prepreg 1 is unwound from a wound body 55 at the same time that the automatic fiber placement device 50 advances in the traveling direction 51, and is placed and stacked at a desired position. At this time, since the surface resin measurement device 2 is provided in front of the automatic fiber placement device 50, the thickness and the coated state of the resin present at the surface layer of the prepreg previously placed and stacked are measured, and the result is reflected in placement conditions (conditions of the heating mechanism and the pressure load roll) of a prepreg to be continuously arranged and stacked. In addition, it is also preferable that the state of the prepreg actually placed is measured by the placement state measurement mechanism 54, and the result is reflected in the placement condition of the prepreg to be arranged next.

In the present invention, the surface resin state of the prepreg is measured as described above, and the measurement result is reflected in the automatic fiber placement device to control the placement position of the prepreg. Then, a stacked body of the prepreg stacked by the automatic fiber placement device can be molded by an appropriate unit such as an autoclave or a furnace to obtain a molded body. Such a molded body is then subjected to a trimming process or the like as necessary, and can be applied as a part or a product of an aircraft, a spacecraft, an automobile, or the like.

### INDUSTRIAL APPLICABILITY

The measurement method and measurement device according to the present invention can be applied to automated fiber placement (AFP) technology and automated tape layup (ATL) technology used in the aircraft industry and the automobile industry.

### DESCRIPTION OF REFERENCE SIGNS

1: Prepreg
2: Surface resin measurement device
3: Orientation walking of continuous fiber
11: Fiber exposed portion
12: Resin-coated portion
13: Resin-coated thick portion
14: Irradiation light
15: Reflected light
16: Reinforced fiber
17: Thin resin
18: Thick resin
21: Sensor
22: Irradiation source
221: Angle of irradiation source and prepreg
23: Rotation mechanism
24: Holding mechanism
41: Light source
42: Diffusion prevention mechanism
50: Automatic fiber placement device
51: Traveling direction of automatic fiber placement device
52: Pressure load roll
53: Heating mechanism
54: Placement state measurement mechanism
55: Wound body of prepreg

## Claims

1. A measurement method for a resin state, which is a method for measuring a state of a resin present at a surface layer of a prepreg impregnated with the resin in an unidirectional reinforced fiber base material, the method comprising:
irradiating the surface layer of the prepreg with light from an irradiation source;
receiving reflected light from the surface layer of the prepreg by a sensor; and
calculating at least one of a thickness or a coated state of the resin present at the surface layer of the prepreg from intensity of the reflected light.

2. A measurement method for a resin state, which is a method for measuring a state of a resin present at a surface layer of a prepreg impregnated with the resin in an unidirectional reinforced fiber base material, the method comprising:
irradiating the surface layer of the prepreg with light from an irradiation source;
receiving reflected light from the surface layer of the prepreg by a sensor; and
calculating a thickness and a coated state of the resin present at the surface layer of the prepreg from intensity of the reflected light.

3. The measurement method for a resin state according to claim 1 or 2, wherein the irradiation source is arranged in a direction perpendicular to an orientation direction of continuous fibers constituting the unidirectional reinforced fiber base material and so as to have an acute angle with respect to a plane of the unidirectional reinforced fiber base material, while a light receiving surface of the sensor is arranged substantially parallel to the plane of the unidirectional reinforced fiber base material.

4. The measurement method for a resin state according to any one of claims 1 to 3, wherein the irradiation source is arranged in a direction parallel to an orientation direction of continuous fibers constituting the unidirectional reinforced fiber base material and so as to have an acute angle with respect to a plane of the unidirectional reinforced fiber base material, while a light receiving surface of the sensor is arranged perpendicular to reflected light that appears from the plane of the unidirectional reinforced fiber base material in an acute angle direction.

5. The measurement method for a resin state according to any one of claims 1 to 4, wherein the acute angle formed by the irradiation source and the plane of the unidirectional reinforced fiber base material is 5 to 60°.

6. A method for producing a fiber-reinforced resin molded body, wherein, in obtaining a fiber-reinforced resin molded body from a prepreg, a resin state of the prepreg is measured by the method according to any one of claims 1 to 5, and the measurement result is reflected in a placement device for the prepreg to control a placement position of the prepreg.

7. The method for producing a fiber-reinforced resin molded body according to claim 6, wherein a placement state of the prepreg is measured in addition to the resin state and is reflected in control.

8. A measurement device for a resin state, which is a device that measures a state of a resin present at a surface layer of a prepreg impregnated with the resin in an unidirectional reinforced fiber base material, the device comprising at least:
an irradiation source that irradiates the prepreg with irradiation light;
a sensor that receives reflected light from the irradiation light; and
a calculation unit that calculates at least one of a thickness or a coated state of the resin present at the surface layer of the prepreg from intensity of the reflected light.

9. A measurement device for a resin state, which is a device that measures a state of a resin present at a surface layer of a prepreg impregnated with the resin in an unidirectional reinforced fiber base material, the device comprising at least:
an irradiation source that irradiates the prepreg with irradiation light;
a sensor that receives reflected light from the irradiation light; and
a calculation unit that calculates a thickness and a coated state of the resin present at the surface layer of the prepreg from intensity of the reflected light.

10. The measurement device for a resin state according to claim 8 or 9, wherein the irradiation source irradiates irradiation light in a direction perpendicular to an orientation direction of continuous fibers constituting the unidirectional reinforced fiber base material and so as to have an acute angle with respect to a plane of the unidirectional reinforced fiber base material, while a light receiving surface of the sensor is arranged substantially parallel to the plane of the unidirectional reinforced fiber base material.

11. The measurement device for a resin state according to claim 8 or 9, wherein the irradiation source irradiates irradiation light in a direction parallel to an orientation direction of continuous fibers constituting the unidirectional reinforced fiber base material and so as to have an acute angle with respect to a plane of the unidirectional reinforced fiber base material at the surface layer, while a light receiving surface of the sensor is arranged perpendicular to light that appears from the plane of the unidirectional reinforced fiber base material in an acute angle direction.

12. The measurement device for a resin state according to any one of claims 8 to 11, wherein two irradiation sources are provided, and the irradiation sources are arranged at positions that are line-symmetric with respect to an orientation of reinforced fibers of the prepreg.

13. A production device for a fiber-reinforced resin molded body, the production device comprising:
the measurement device according to any one of claims 8 to 12; and
a placement device for a prepreg,
wherein a measurement result by the measurement device is reflected in the placement device to control placement of the prepreg.

14. The production device for a fiber-reinforced resin molded body according to claim 13, the production device further comprising a device that measures a placement state of the prepreg,
wherein a placement result of the prepreg is reflected in control.
